# EUROPÄISCHE PATENTSCHRIFT

(11) **EP 3 032 981 B1**
(45) Veröffentlichungstag und Bekanntmachung des Hinweises auf die Patenterteilung: **02.08.2017**
(21) Anmeldenummer: 14747033.0
(22) Anmeldetag: 04.08.2014
(51) Int. Cl.: A44B 11/25

(54) **SICHERHEITSGURTEINRICHTUNG IN EINEM FAHRZEUG**
SAFETY BELT DEVICE IN A VEHICLE
DISPOSITIF DE CEINTURE DE SÉCURITÉ DANS UN VÉHICULE

(30) Priorität: 16.08.2013 DE 102013216326
(43) Veröffentlichungstag der Anmeldung: 22.06.2016
(73) Patentinhaber: Volkswagen Aktiengesellschaft, 38440 Wolfsburg (DE)
(72) Erfinder: MÖKER, Carsten, 38471 Rühen (DE); MEYNER, Tom, 38550 Isenbüttel (DE)
(86) Internationale Anmeldenummer: PCT/EP2014/066686
(87) Internationale Veröffentlichungsnummer: WO 2015/022214

(56) Entgegenhaltungen:
- DE-A1- 4 215 384
- DE-U1- 9 001 285
- US-A- 4 979 764

## Beschreibung

Die Erfindung betrifft einen Gurtbeschlag für eine Sicherheitsgurteinrichtung in einem Fahrzeug nach dem Oberbegriff des Patentanspruches 1 und eine Sicherheitsgurteinrichtung nach dem Patentanspruch 8.

Die Sicherheitsgurteinrichtung eines Fahrzeuges kann beispielhaft einen Beckengurt sowie einen diagonal über den Oberkörper des Fahrzeuginsassen verlaufenden Schultergurt aufweisen. Der Beckengurt ist bei angelegtem Sicherheitsgurt über zwei seitlich gegenüberliegende, untere Anbindungspunkte am Fahrzeugaufbau verankert. Üblicherweise ist der in der Fahrzeugquerrichtung innen gelegene Anlegungspunkt lösbar ausgeführt, und zwar mit einem am Beckengurt vorgesehen Gurtbeschlag, dessen Steckzunge in ein aufbauseitig verankertes Gurtschloss einsteckbar ist.

Aus der DE 42 15 384 A1 ist ein gattungsgemäßer Gurtbeschlag mit einem Basisabschnitt und einer daran anschließenden Steckzunge bekannt. Im Basisabschnitt ist eine Gurtöse vorgesehen, durch die ein Gurtband geführt ist. Bei angelegtem Sicherheitsgurt teilt der in das Gurtschloß eingesteckte Gurtbeschlag das Gurtband in einen Beckengurtabschnitt und in einen Schultergurtabschnitt auf. Um im Crashfall den Beckengurtabschnitt des Gurtbandes zu blockieren, ist ein Klemmelement vorgesehen, das zwischen einer Freigabestellung, in der das Gurtband frei bewegbar durch die Gurtöse hindurch geführt ist, und einer Klemmstellung verstellbar ist, in der das Gurtband zwischen dem Klemmelement und einem als Widerlager wirkenden Klemmanschlag mit einer Klemmkraft festgeklemmt ist. Das Klemmelement ist um eine Drehachse zwischen der Freigabestellung und der Klemmstellung schwenkbar sowie in Richtung der Freigabestellung elastisch vorgespannt. Im normalen Fahrbetrieb ist somit das Gurtband frei bewegbar über Gurtlaufflächen des Gurtbeschlags geführt. Demgegenüber wirken im Crashfall auf das Klemmelement erhöhte Gurtkräfte. Dies führt dazu, dass das Klemmelement in einer Drehrichtung bis in die Klemmstellung verlagert wird, in der das Gurtband mit der Klemmkraft zwischen dem Klemmelement und dem Klemmanschlag festgeklemmt ist.

Im Stand der Technik weist das Klemmelement einen Klemmsteg auf, der in der Gurtband-Querrichtung verläuft. Der Klemmsteg ist in der Klemmstellung in einem Linienkontakt mit dem Gurtband, und zwar durchgängig zwischen den beiden Gurtband-Außenkanten in der Gurtband-Querrichtung. Auf diese Weise ergibt sich über die Gurtband-Querrichtung hinweg zwischen den beiden Gurtband-Außenkanten eine lineare, gleichmäßige bzw. konstante Klemmkraftverteilung.

In dynamischen Sicherheitsversuchen wurde festgestellt, dass das im Crashfall zwischen dem Klemmelement und dem Klemmanschlag festgeklemmte Gurtband-Gewebe einer übermäßig hohen Belastung ausgesetzt sein kann, wodurch die Gefahr eines Gurtbandrisses besteht.

Aus der DE 90 01 285 U1 ist eine Gurtzunge mit Griffteil für einen Sicherheitsgurt bekannt. Aus der US 4,979,764 A ist ein weiterer Gurtbeschlag für eine Sicherheitsgurteinrichtung für ein Fahrzeug bekannt.

Die Aufgabe der Erfindung besteht darin, einen Gurtbeschlag für eine Sicherheitsgurteinrichtung in einem Fahrzeug bereitzustellen, der im Crashfall die Betriebssicherheit der Sicherheitsgurteinrichtung erhöht.

Die Aufgabe ist durch die Merkmale des Patentanspruches 1 oder des Patentanspruches 8 gelöst. Bevorzugte Weiterbildungen der Erfindung sind in den unabhängigen Ansprüchen offenbart.

Die Erfindung beruht speziell auf dem Sachverhalt, dass das Gurtschloss über ein torsionsweiches, flexibles Stahlseil am Fahrzeugrohbau montiert ist. Bei den oben erwähnten dynamischen Sicherheitsversuchen wurde erkannt, dass sich ein derart flexibel gehaltertes Gurtschloss zusammen mit dem darin eingesteckten Gurtbeschlag impulsartig verdreht. Bei dieser Gurtschlossverdrehung wird das Gurtband im Bereich der Gurtöse des Gurtbeschlages mit einer Querkraftkomponente beansprucht. Dies führt zu einer Querverschiebung des Gurtbandes in den Eckbereich der Gurtöse. Hierdurch ergibt sich im Gurtösen-Eckbereich eine sehr starke Walkbeanspruchung des Gurtband-Materials, wodurch dieses stärker belastet wird.

Vor diesem Hintergrund ist gemäß dem kennzeichnenden Teil des Patentanspruches 1 die Gurtlauffläche des Gurtbeschlags mit einer speziellen Oberflächenkontur versehen. Im Lastfall, insbesondere bei noch nicht festgeklemmtem Gurtband, wird durch diese Oberflächenkontur eine stabile Querführung des Gurtbandes bereitgestellt, die einer auf das Gurtband wirkenden Querkraftkomponente entgegenwirkt und somit eine Querverschiebung des Gurtbandes in den Eckbereich der Gurtöse verhindert. Die oben erwähnte Oberflächenkontur in der Gurtlauffläche weisen Vertiefungen, Riefen oder Rillen auf, die in der Gurtband-Längsrichtung ausgerichtet sind. Alternativ dazu können auch Kreuzriefen vorgesehen sein. Im Lastfall wird das Kunststoffmaterial des durch die Gurtöse geführten Gurtbandes formschlüssig in die Vertiefungen gedrückt, wodurch die Querverschiebung des Gurtbandes in den Eckbereich der Gurtöse betriebssicher verhindert ist.

Bei einem angelegten Sicherheitsgurt kann der Gurtbeschlag, in der Gurtband-Längsrichtung betrachtet, auf gegenüberliegenden Seiten der Gurtöse Gurtlaufflächen aufweisen, über die im Normalbetrieb das Gurtband frei bewegbar geführt ist. Die Gurtlaufflächen können sowohl auf dem Klemmelement als auch auf dem Basisabschnitt des Gurtbeschlags ausgebildet sein. Für eine stabile Gurtband-Führung können die beiden Gurtlaufflächen jeweils die erfindungsgemäße Oberflächenkontur aufweisen. Die Vertiefungen, Riefen oder Rillen können in etwa 2,5 mm breit sein und in etwa 1,5 mm tief sein. Die Vertiefungen können zudem in einem gleichmäßigen Abstand in der Querrichtung des Gurtbandes vorgesehen sein und sich, in der Gurtband-Längsrichtung betrachtet, über die gesamte Gurtlauffläche erstrecken. Im Hinblick auf einen verbesserten Formschluß zwischen dem Gurtband und der Gurtbandlauffläche können die rillenförmigen Vertiefungen entgegen der Bewegungsrichtung des Gurtbands offen sein, das heißt keine stirnseitige Begrenzungswand aufweisen.

Zur Realisierung eines erfindungsgemäßen Gurtbeschlages kann das Klemmelement im Basisabschnitt des Gurtbeschlages um eine Drehachse zwischen der Freigabestellung und der Klemmstellung schwenkbar sein. Das Klemmelement kann zudem mittels eines Federelementes in die Freigabestellung elastisch vorgespannt sein. Im normalen Fahrbetrieb kann das Gurtband bei angelegtem Sicherheitsgurt in Gleitkontakt sowie frei bewegbar über eine Gurtlauffläche des Klemmelementes geführt werden. In diesem Fall verbleibt das Klemmelement elastisch vorgespannt in seiner Freigabestellung. Demgegenüber wirken im Crashfall wesentlich größere Gurtkräfte auf den Gurtbeschlag und damit auch auf das Klemmelement ein. Unter Beaufschlagung dieser erhöhten Gurtkräfte kann das Klemmelement in einer Drehrichtung bis in die Klemmstellung verlagert werden. Auf diese Weise wird der Beckengurtabschnitt des Sicherheitsgurtes sicherheitsgünstig blockiert.

Zudem kann das Klemmelement eine Klemmkontur aufweisen, mit der das Gurtband in der Klemmstellung über die Gurtbandbreite in einer nicht linearen und/oder ungleichmäßigen Klemmkraftverteilung festgeklemmt werden. Die Gurtlauffläche mit der speziellen Oberflächenkontur ist dabei in der Drehrichtung vorauseilend am schwenkbaren Klemmelement ausgebildet, während die Klemmkontur in der Drehrichtung betrachtet nacheilend am Klemmelement angeordnet ist.

Die Oberflächenkontur kann sich in der Gurt-Querrichtung durchgängig über die gesamte Gurtbandbreite erstrecken.

Die vorstehend erläuterten und/oder in den abhängigen Ansprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: einen Ausschnitt einer Dreipunkt-Sicherheitsgurteinrichtung in einer Gebrauchslage, bei der der Sicherheitsgurt am Fahrzeuginsassen angelegt ist;
- Fig. 2: den Gurtbeschlag in einer Explosionsdarstellung;
- Fig. 3: eine vergrößerte Schnittansicht entlang der Schnittebene I-I aus der Fig. 1, in der das Klemmelement in der Freigabestellung gezeigt ist;
- Fig. 4: in einer Ansicht entsprechend der Fig. 3 das Klemmelement in der Klemmstellung;
- Fig. 5: in einer stark vergrößerten sowie vereinfachten Prinzipdarstellung das Klemmelement, dessen Gurtlauffläche mit der Oberflächenkontur versehen ist;
- Fig. 6 und 7: jeweils unterschiedlichen Varianten der Oberflächenkontur in der Gurtlauffläche des Gurtbeschlags; sowie
- Fig. 8: eine Schnittdarstellung entlang der Schnittebene II-II aus der Fig. 7.

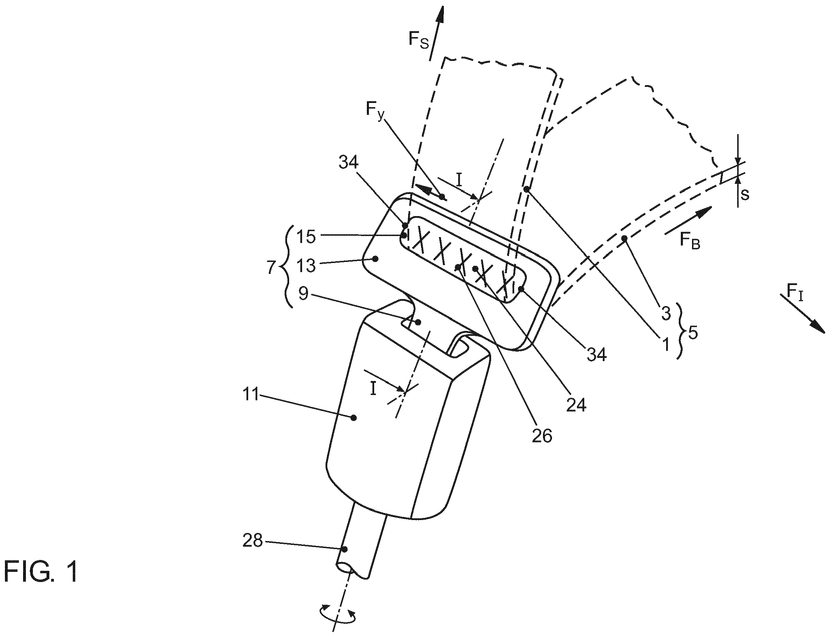

In der Teilansicht der Fig. 1 ist in einer Gebrauchlage, das heißt bei am Fahrzeuginsassen angelegtem Sicherheitsgurt, ein aus einem Schultergurtabschnitt 1 und einem Beckengurtabschnitt 3 gebildeter Dreipunkt-Sicherheitsgurt gezeigt. Der Fahrersitz sowie der Fahrzeuginsasse ist aus Gründen der Übersichtlichkeit nicht dargestellt. Das ebenfalls nicht gezeigte obere Ende des Schultergurtabschnittes 1 ist mit einem nicht dargestellten Retraktor verbunden, der zum Beispiel in der B-Säule angeordnet ist. Gemäß der Fig. 1 erstreckt sich der Beckengurtabschnitt 3 in der Fahrzeugquerrichtung y von einem nicht gezeigten äußeren Anbindungspunkt bis zu einem Gurtbeschlag 7, der mit einer Steckzunge 9 in ein Gurtschloss 11 eingesteckt ist.

Der Gurtbeschlag 1 setzt sich aus einem Basisabschnitt 13 sowie der bereits erwähnten Steckzunge 9 zusammen. Der Basisabschnitt 13 des Gurtbeschlages 1 weist eine Gurtöse 15 auf, durch die das Gurtband 5 geführt ist. Bei dem in der Fig. 1 dargestellten angelegten Sicherheitsgurt ist das Gurtband 5 an der Gurtöse 15 in den Schultergurtabschnitt 1 und in den Beckengurtabschnitt 3 aufgeteilt.

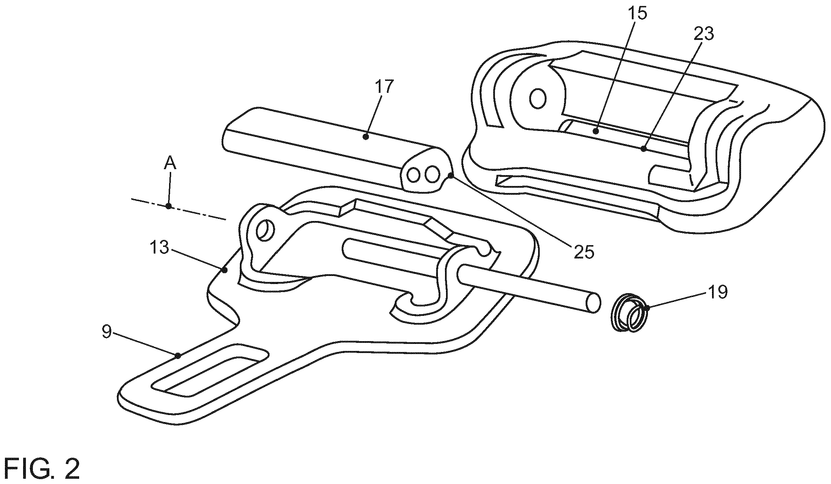

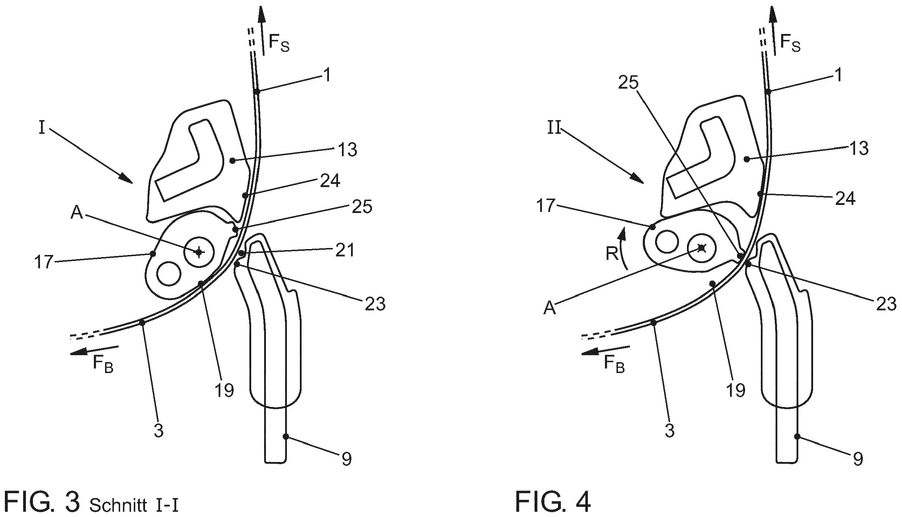

Wie aus den Fig. 2 und 3 hervorgeht, ist am Basisabschnitt 13 des Gurtbeschlages 7 ein leistenförmiges Klemmelement 17 um eine Drehachse A schwenkbar angelenkt. Das Klemmelement 17 ist im normalen Fahrbetrieb mittels einer Feder 18 (Fig. 2) in eine, in der Fig. 3 gezeigte Freigabestellung I elastisch vorgespannt. In der Freigabestellung I ist das Gurtband 5 frei bewegbar sowie in Gleitkontakt über eine Gurtlauffläche 19 des Klemmelementes 17 und über eine Gurtlauffläche 24 des Basisabschnitts 13 geführt.

Das Klemmelement 17 begrenzt in der Freigabestellung I zusammen mit einem am Basisabschnitt 7 angeformten Klemmansatz 23 einen Klemmspalt 21 (Fig. 2).

In der Fig. 4 ist der Gurtbeschlag im Lastfall, zum Beispiel ein Crashfall, dargestellt. Im Crashfall wirken stark erhöhte Gurtkräfte F_{B}, F_{S} auf den Beckengurtabschnitt 3 und dem Schulterabschnitt 1 des Sicherheitsgurtes. Dadurch wird auch das Klemmelement 17 mit erhöhten Gurtkräften beaufschlagt, wodurch es in einer Drehrichtung R in die Klemmstellung II verlagert wird. In der Klemmstellung II drückt ein am Klemmelement 17 angeformter Klemmsteg 25 mit einer Klemmkraft F_{K} das Gurtband 5 gegen den Klemmansatz 23. Auf diese Weise wird im Crashfall der Beckengurtabschnitt 3 sicherheitsgünstig blockiert.

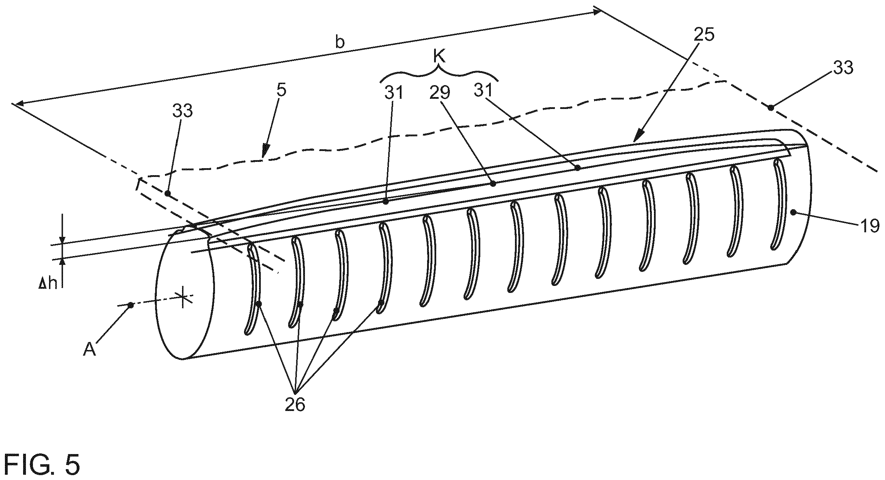

Gemäß der Fig. 5 ist der Klemmsteg 25 des Klemmelementes 17 in der Gurtband-Querrichtung y nicht geradlinig sowie plan konturiert, sondern weist der Klemmsteg 25 in der Querrichtung y eine Bombierung beziehungsweise Ausbauchung auf, und zwar mit einem in etwa in der Querrichtung y mittig angeordneten Scheitel 29 sowie in der Querrichtung y seitlich abfallenden Bogenabschnitten 31. Der Scheitel 29 sowie die seitlich davon abfallenden Bogenabschnitte 31 ergeben gemäß der Fig. 5 eine Klemmkontur K, die die über die Gurtbandbreite b die eingezeichnete Klemmkraftverteilung F(b) ergibt. Der Scheitel 29 der Bombierung ragt um eine Höhe Δh von einer Grundfläche 30 des Klemmsteges 25 vor, der kleiner oder gleich der Gurtband-Materialstärke s (Fig. 1) ist, die üblicherweise in einem Bereich von 1,2 mm liegt.

Mittels der in der der Fig. 5 gezeigten Klemmkontur K ergibt sich zwischen den beiden Gurtband-Außenkanten 33 kein durchgängig linearer sowie gleichmäßiger Verlauf der Klemmkraftverteilung, sondern vielmehr eine nicht lineare Klemmkraftverteilung mit einer maximalen Klemmkraft in der Mitte des Gurtbandes 5. Entsprechend ergibt sich speziell an den Außenkanten 33 des Gurtbandes 5 nur eine geringe oder gegebenenfalls überhaupt keine Klemmkraft-Beaufschlagung.

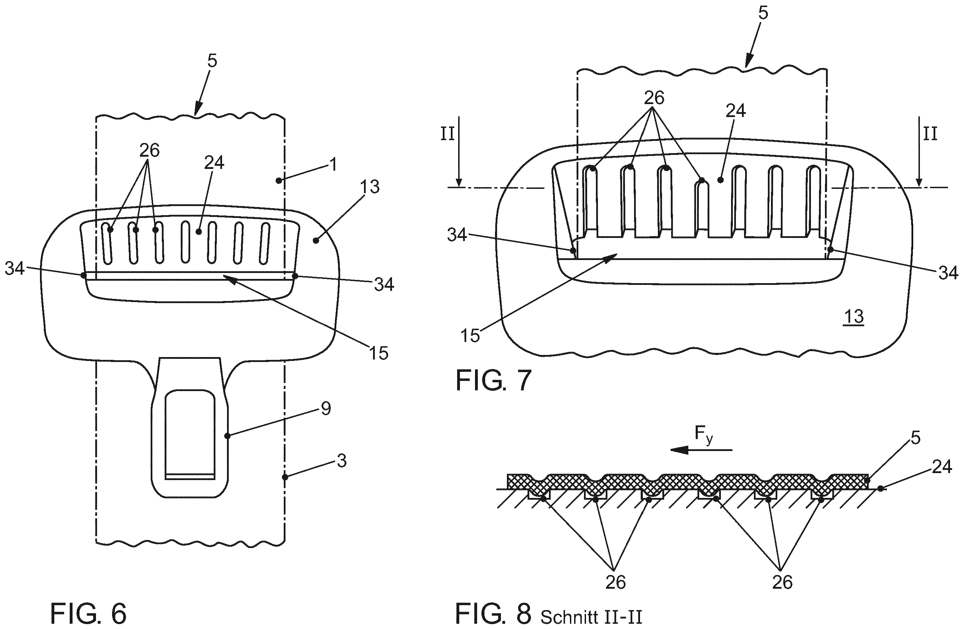

Wie bereits erwähnt, ist das Gurtband 1 in der Freigabestellung I (Fig. 3) in Gleitkontakt über die Gurtlauffläche 19 des Klemmelementes 17 geführt. Zusätzlich ist auf der, in der Gurtband-Längsrichtung betrachtet, gegenüberliegenden Seite der Gurtöse 15 die weitere Gurtlauffläche 24 vorgesehen, über die das Gurtband 1 bei angelegtem Sicherheitsgurt geführt ist. Wie aus der Fig. 1 sowie den Fig. 5 bis 8 hervorgeht, weisen die beiden Gurtlaufflächen 19, 24 jeweils eine spezielle Oberflächenkontur 26 auf, etwa Vertiefungen, Riefen oder Rillen, die in der Gurtband-Längsrichtung ausgerichtet sind (Fig. 6 bis 8), oder alternativ Kreuzriefen (Fig. 1).

Die Wirkungsweise dieser speziellen Oberflächenkontur 26 wird nachfolgend anhand eines Crashfalls beschrieben: Bei einem solchen Crashfall wird gemäß der Fig. 1 der angegurtete Fahrzeuginsasse mit einer Kraft F_{I} in der Fahrtrichtung nach vorne beschleunigt. Zudem wirken die stark erhöhten Gurtkräfte F_{B}, F_{S} auf den Gurtbeschlag 7. Das Gurtschloss 11 mit darin eingestecktem Gurtbeschlag 7 sind über flexibles Stahlseil 28 am Fahrzeugrohbau gehaltert. Das derart flexibel gehalterte Gurtschloss 11 neigt im Crashfall dazu, sich zusammen mit dem darin eingesteckten Gurtbeschlag 7 impulsartig zu verdrehen. Bei dieser Gurtschlossverdrehung (in der Fig. 1 durch einen mit 32 gezeigten Doppelpfeil angedeutet) wird das Gurtband 5 im Bereich der Gurtöse 15 des Gurtbeschlages 7 mit einer Querkraftkomponente F_{y} beansprucht, die das Gurtband 1 im Bereich der Gurtöse 15 in Richtung auf den Eckbereich 34 der Gurtöse 15 drückt. Dies führt im Stand der Technik zu einer Querverschiebung des Gurtbandes 5 in den Eckbereich 34 der Gurtöse 15 und folglich im Gurtösen-Eckbereich 34 zu einer sehr starken Walkbeanspruchung des Gurtband-Materials, wodurch Beschädigungen eintreten können.

Um eine solche Querverschiebung des Gurtbands 5 zu vermeiden, sind die Gurtlaufflächen 19, 24 mit einer speziellen Oberflächenkontur 26 ausgebildet, zum Beispiel Riefen, Rillen und/oder Kreuzriefen. Aufgrund der im Lastfall sich erhöhenden Gurtkräfte F_{S} und F_{B} wird das Kunststoffmaterial des Gurtbandes 5 in die Vertiefungen der Oberflächenkontur 26 der Gurtlaufflächen 19, 24 gedrückt, wie es in der Fig. 8 gezeigt ist. Auf diese Weise ergibt sich zwischen dem Gurtband 5 und der Gurtlauffläche 24 ein erhöhter Form- und Reibschluss in der Querrichtung, wodurch der Querkraftkomponente F_{y} wirksam entgegengewirkt wird, ohne dass es zu einer nachteiligen Querverschiebung in Richtung auf den Eckbereich 34 der Gurtöse 15 kommt.

In der Fig. 5 ist das Klemmelement 17 in Alleinstellung gezeigt. Dessen Gurtlauffläche 19 ist mit einer Oberflächenkontur 26 versehen und in der Drehrichtung R der Klemmkontur K vorgelagert. Im Unterschied zur Fig. 1, in der die Gurtlauffläche 24 des Gurtbeschlags 7 durch Kreuzriefen gebildet ist, besteht die in der Fig. 5 gezeigte Oberflächenkontur 26 aus zueinander parallel angeordneten Rillen, die in der Gurtband-Längsrichtung ausgerichtet sind.

Gleiches trifft auch auf die Gurtlauffläche 24 des in der Fig. 6 gezeigten Gurtbeschlags 7 zu, in der die Oberflächenkontur 26 ebenfalls längsverlaufende parallele Rillen aufweist.

In der Fig. 7 sind die Rillen in einer weiteren Variante entgegen der Bewegungsrichtung des Gurtbands 5 durchgefräst, das heißt offen ohne eine stirnseitige Begrenzungswand gestalten. Auf diese Weise kann der Formschluß zwischen dem Gurtband 5 und der Gurtlauffläche 24 gesteigert werden.

## Patentansprüche

1. Gurtbeschlag für eine Sicherheitsgurteinrichtung in einem Fahrzeug, der einen Basisabschnitt (13) und eine daran anschließende Steckzunge (9) aufweist, in welchem Basisabschnitt (13) eine Gurtöse (15) vorgesehen ist, durch die ein Gurtband (5) geführt ist und die bei angelegtem Sicherheitsgurt das Gurtband (5) in einen Schultergurtabschnitt (1) und einen Beckengurtabschnitt (3) aufteilt, und ein Klemmelement (17) aufweist, das zwischen einer Freigabestellung (I), in der das Gurtband (5) frei bewegbar in Gleitkontakt über zumindest eine Gurtlauffläche (19, 24) des Gurtbeschlags geführt ist, und einer Klemmstellung (II) verstellbar ist, in der das Gurtband (5) im Lastfall, etwa einem Crashfall, zwischen einem Klemmanschlag (23) am Basisabschnitt (13) und dem Klemmelement (17) festgeklemmt ist, **dadurch gekennzeichnet, dass** die Gurtlauffläche (19, 24) des Gurtbeschlags (7) mit einer Oberflächenkontur (26) versehen ist, die im Lastfall bei noch nicht festgeklemmtem Gurtband (5) eine stabile Querführung des Gurtbands (5) gewährleistet, die einer auf das Gurtband (5) wirkenden Querkraftkomponente (F_{y}) entgegenwirkt, und dass die Oberflächenkontur (26) in der Gurtband-Längsrichtung ausgerichtete Vertiefungen, Riefen oder Rillen und/oder Kreuzriefen aufweist.

2. Gurtbeschlag nach Anspruch 1, **dadurch gekennzeichnet, dass** die Gurtlaufflächen (19, 24), in der Gurtband-Längsrichtung betrachtet, auf gegenüberliegenden Seiten der Gurtöse (15) vorgesehen sind, dass die Gurtlaufflächen (19, 24) insbesondere am Klemmelement (17) und/oder am Gurtbeschlag-Basisabschnitts (13) ausgebildet sind, und dass die Gurtlaufflächen (19, 24) jeweils mit der Oberflächenkontur (26) versehen sind.

3. Gurtbeschlag nach Anspruch 1 oder 2, **dadurch gekennzeichnet, dass** die Vertiefungen der Oberflächenkontur (26) jeweils in etwa 2,5 mm breit und in etwa 1,5 mm tief sind, und/oder dass die rillenförmigen Vertiefungen entgegen der Bewegungsrichtung des Gurtbands (5) offen sind, das heißt keine stirnseitige Begrenzungswand aufweisen.

4. Gurtbeschlag nach einem der vorhergehenden Ansprüche, **dadurch gekennzeichnet, dass** das Klemmelement (17) um eine Drehachse (A) zwischen der Freigabestellung (I) und der Klemmstellung (II) schwenkbar ist, und insbesondere in die Freigabestellung (I) elastisch vorspannbar ist, und dass das Klemmelement (17) im Lastfall unter Beaufschlagung des Gurtbands (5) mit erhöhten Gurtkräfte (F_{B}, F_{S}) in einer Drehrichtung (R) in die Klemmstellung (II) schwenkbar ist.

5. Gurtbeschlag nach einem der vorhergehenden Ansprüche, **dadurch gekennzeichnet, dass** das Klemmelement (17) eine Klemmkontur (K) aufweist, mit der das Gurtband (5) in der Klemmstellung (II) festklemmbar ist.

6. Gurtbeschlag nach Anspruch 5, **dadurch gekennzeichnet, dass** das Klemmelement (17) sowohl eine Gurtlauffläche (19) mit der Oberflächenkontur (26) als auch die Klemmkontur (K) aufweist, und dass, in der Drehrichtung (R) betrachtet, die Oberflächenkontur (26)vorauseilend und die Klemmkontur (K) nacheilend am Klemmelement (17) angeordnet sind.

7. Gurtbeschlag nach einem der vorhergehenden Ansprüche, **dadurch gekennzeichnet, dass** sich die Oberflächenkontur (26) in der Gurt-Querrichtung (y) durchgängig über die gesamte Gurtbandbreite (b) erstreckt.

8. Sicherheitsgurteinrichtung für ein Fahrzeug mit einem Gurtbeschlag nach einem der vorhergehenden Ansprüche.

## Claims

1. Belt fitting for a safety belt device in a vehicle, which has a basic portion (13) and an adjoining insertion latch (9), in which basic portion (13) a belt eye (15) is provided through which a belt strap (5) is guided and which, when the safety belt is put on, divides the belt strap (5) into a shoulder belt portion (1) and a lap belt portion (3), and has a clamping element (17) which is adjustable between a release position (I), in which the belt strap (5) is guided in a freely movable manner in sliding contact over at least one belt-running surface (19, 24) of the belt fitting, and a clamping position (II), in which the belt strap (5) is firmly clamped between a clamping stop (23) on the basic portion (13) and the clamping element (17) in the event of a load, for example in the event of a crash, **characterized in that** the belt-running surface (19, 24) of the belt fitting (7) is provided with a surface contour (26) which, in the event of a load when the belt strap (5) is not yet firmly clamped, ensures stable transverse guidance of the belt strap (5), said transverse guidance opposing a transverse force component (F_{y}) acting on the belt strap (5), and **in that** the surface contour (26) has depressions, furrows or grooves and/or cross furrows oriented in the longitudinal direction of the belt strap.

2. Belt fitting according to Claim 1, **characterized in that** the belt running surfaces (19, 24) are provided on opposite sides of the belt eye (15), as viewed in the longitudinal direction of the belt strap, **in that** the belt-running surfaces (19, 24) are formed in particular on the clamping element (17) and/or on the belt-fitting basic portion (13), and **in that** the belt-running surfaces (19, 24) are each provided with the surface contour (26).

3. Belt fitting according to Claim 1 or 2, **characterized in that** the depressions of the surface contour (26) are each approximately 2.5 mm in width and approximately 1.5 mm in depth, and/or **in that** the groove-shaped depressions are open counter to the direction of movement of the belt strap (5), that is to say do not have an end-side boundary wall.

4. Belt fitting according to one of the preceding claims, **characterized in that** the clamping element (17) is pivotable about an axis of rotation (A) between the release position (I) and the clamping position (II), and in particular is elastically prestressable into the release position (I), and **in that**, in the event of a load, the clamping element (17) is pivotable in one direction of rotation (R) into the clamping position (II), with the belt strap (5) being subjected to increased belt forces (F_{B}, F_{S}).

5. Belt fitting according to one of the preceding claims, **characterized in that** the clamping element (17) has a clamping contour (K) with which the belt strap (5) can be firmly clamped in the clamping position (II).

6. Belt fitting according to Claim 5, **characterized in that** the clamping element (17) has both a belt-running surface (19) with the surface contour (26), and the clamping contour (K), and **in that**, as viewed in the direction of rotation (R), the surface contour (26) is arranged running ahead and the clamping contour (K) trailing behind on the clamping element (17).

7. Belt fitting according to one of the preceding claims, **characterized in that** the surface contour (26) extends continuously over the entire belt strap width (b) in the transverse direction (y) of the belt.

8. Safety belt device for a vehicle with a belt fitting according to one of the preceding claims.

## Revendications

1. Ferrure de ceinture pour un dispositif de ceinture de sécurité dans un véhicule, qui présente une portion de base (13) et une languette d'accrochage (9) s'y raccordant, dans laquelle portion de base (13) est prévu un oeillet de ceinture (15) à travers lequel est guidée une bande de ceinture (5) et qui, lorsque la ceinture de sécurité est bouclée, divise la bande de ceinture (5) en une portion de ceinture-baudrier (1) et une portion de ceinture abdominale (3), et qui présente un élément de serrage (17) qui peut être déplacé entre une position de libération (I) dans laquelle la bande de ceinture (5) est guidée de manière librement déplaçable en contact de glissement par le biais d'au moins une surface de glissement de ceinture (19, 24) de la ferrure de ceinture, et une position de serrage (II), dans laquelle la bande de ceinture (5) est serrée fixement en cas de charge, par exemple en cas de collision, entre une butée de serrage (23) sur la portion de base (13) et l'élément de serrage (17), **caractérisée en ce que** la surface de glissement de ceinture (19, 24) de la ferrure de ceinture (7) est pourvue d'un contour de surface (26) qui, en cas de charge, garantit un guidage transversal stable de la bande de ceinture (5) lorsque la bande de ceinture (5) n'est pas encore serrée fixement, qui s'oppose à une composante de force transversale (F_{y}) agissant sur la bande de ceinture (5) et **en ce que** le contour de surface (26) présente des renfoncements, des stries ou des rainures et/ou des stries croisées orientés dans la direction longitudinale de la bande de ceinture.

2. Ferrure de ceinture selon la revendication 1, **caractérisée en ce que** les surfaces de glissement de ceinture (19, 24), vues dans la direction longitudinale de la bande de ceinture, sont prévues sur des côtés opposés de l'oeillet de ceinture (15), **en ce que** les surfaces de glissement de ceinture (19, 24) sont réalisées en particulier sur l'élément de serrage (17) et/ou sur la portion de base de ferrure de ceinture (13), et **en ce que** les surfaces de glissement de ceinture (19, 24) sont à chaque fois pourvues du contour de surface (26).

3. Ferrure de ceinture selon la revendication 1 ou 2, **caractérisée en ce que** les renfoncements du contour de surface (26) ont chacun approximativement une largeur d'environ 2,5 mm et une profondeur d'environ 1,5 mm, et/ou **en ce que** les renfoncements en forme de rainure sont ouverts dans le sens opposé à la direction de déplacement de la bande de ceinture (5), c'est-à-dire qu'ils ne présentent pas de paroi de limitation frontale.

4. Ferrure de ceinture selon l'une quelconque des revendications précédentes, **caractérisée en ce que** l'élément de serrage (17) peut pivoter autour d'un axe de rotation (A) entre la position de libération (I) et la position de serrage (II), et notamment peut être précontraint élastiquement dans la position de libération (I) et **en ce que** l'élément de serrage (17), en cas de charge, peut pivoter par sollicitation de la bande de ceinture (5) avec des forces de ceinture accrues (F_{B}, F_{S}) dans un sens de rotation (R) dans la position de serrage (II).

5. Ferrure de ceinture selon l'une quelconque des revendications précédentes, **caractérisée en ce que** l'élément de serrage (17) présente un contour de serrage (K) avec lequel la bande de ceinture (5) peut être serrée fixement dans la position de serrage (II).

6. Ferrure de ceinture selon la revendication 5, **caractérisée en ce que** l'élément de serrage (17) présente à la fois une surface de glissement de ceinture (19) avec le contour de surface supérieure (26) ainsi que le contour de serrage (K), et **en ce que**, vu dans le sens de rotation (R), le contour de surface (26) est disposé en avant et le contour de serrage (K) est disposé en arrière au niveau de l'élément de serrage (17).

7. Ferrure de ceinture selon l'une quelconque des revendications précédentes, **caractérisée en ce que** le contour de surface (26) s'étend dans la direction transversale (y) de la ceinture de manière continue sur toute la largeur (b) de la bande de ceinture.

8. Dispositif de ceinture de sécurité pour un véhicule comprenant une ferrure de ceinture selon l'une quelconque des revendications précédentes.
